# EUROPÄISCHE PATENTSCHRIFT

(11) **EP 3 738 861 B1**
(45) Veröffentlichungstag und Bekanntmachung des Hinweises auf die Patenterteilung: **05.03.2025**
(21) Anmeldenummer: 20169647.3
(22) Anmeldetag: 15.04.2020
(51) Int. Cl.: B62D 6/00, B60W 30/02, B60W 30/04, B60W 30/12, B60T 8/17

(54) **BEENDEN EINER BANKETTFAHRT EINES KRAFTFAHRZEUGS**
ENDING THE PROCESS OF A MOTOR VEHICLE DRIVING ONTO THE HARD SHOULDER
EXTRÉMITÉ D'ACCOTEMENTS POUR VÉHICULE AUTOMOBILE

(30) Priorität: 13.05.2019 DE 102019206883
(43) Veröffentlichungstag der Anmeldung: 18.11.2020
(73) Patentinhaber: VOLKSWAGEN AG, 38440 Wolfsburg (DE)
(72) Erfinder: Bartels, Arne, 38448 Wolfsburg (DE); Kolms, Thomas, 38553 Wasbüttel (DE); Klingemann, Timo, 38524 Sassenburg (DE); Krings, Robin, 50226 Frechen (DE); Sakpal, Amogh, 50321 Brühl (DE)

(56) Entgegenhaltungen:
- DE-A1- 10 214 612
- US-A1- 2005 080 532
- US-A1- 2015 046 015

## Beschreibung

Die vorliegende Erfindung betrifft ein Verfahren zum Beenden einer Bankettfahrt eines Kraftfahrzeugs sowie ein entsprechendes System und ein Computerprogramm.

Bei einer Bankettfahrt eines Kraftfahrzeugs, also eine Situation, bei der wenigstens ein Rad des Kraftfahrzeugs sich in einem Bankett neben einer Fahrbahn befindet und sich wenigstens ein gegenüberliegendes Rad auf der Fahrbahn befindet, liegt eine sogenannte µ-Splitsituation vor. Dabei steht µ beispielsweise für den Reibwert zwischen den jeweiligen Rädern und dem entsprechenden Untergrund. Beispielsweise befinden sich die linken Räder des Kraftfahrzeugs auf der Fahrbahn mit hohem Reibwert, beispielsweise Beton oder Asphalt, wohingegen sich die rechten Räder des Kraftfahrzeugs im Bankett mit niedrigem Reibwert befinden, beispielsweise Gras, Schotter oder Sand. Wenn der Fahrer des Kraftfahrzeugs diese Situation erkennt und versucht, das Fahrzeug zurück auf die Fahrbahn zu lenken, kann es vorkommen, dass der Fahrer übermäßige Lenk-, Brems- oder Beschleunigungsmanöver durchführt und in der Konsequenz die Kontrolle über das Kraftfahrzeug verliert oder weiter als beabsichtigt in Richtung der gegenüberliegenden Fahrbahnseite gerät. Dadurch können schwere Unfälle entstehen.

Bekannte Fahrerassistenzsysteme, wie beispielsweise ESC-Systeme, können nicht in jeder Situation, insbesondere wenn der Fahrer eine besonders intensive Reaktion zeigt, das Schleudern oder Übersteuern des Fahrzeugs verhindern. Auch optische Fahrerassistenzsysteme, die auf Kameras oder dergleichen basieren, können nicht in jeder Situation Fahrstreifenmarkierungslinien oder Fahrbahnkanten erkennen, sodass auch diese nicht zuverlässig Unfälle aufgrund von Bankettfahrten verhindern können.

In dem Dokument US 2010/0182139 A1 wird ein Verfahren zum Warnen eines Fahrers beim Verlassen einer Spur beschrieben. Dazu wird eine Zeit abgeschätzt, innerhalb der die Spur voraussichtlich verlassen wird und ein Müdigkeitsindex des Fahrers bestimmt. Für die Abschätzung kann beispielsweise ein zeitlicher Verlauf des Lenkwinkels erfasst werden.

Dokument US 2005 / 080532 A1 beschreibt ein Verfahren, das verhindern soll, dass ein Fahrzeug ausbricht oder ins Schlingern gerät, wenn der Fahrer in einer µ-Split Situation bremst. Dazu wird ein Links-Rechts-Bremskraftunterschied beim Bremsen des Fahrzeugs bestimmt und als solcher gewertet, wenn er größer ist als ein Grenzwert. Ferner wird abhängig von einer Lenkwinkelgeschwindigkeit ein Korrekturfaktor bestimmt und wiederum abhängig davon ein Lenkkorrekturbetrag berechnet.

Vor diesem Hintergrund ist es eine Aufgabe der vorliegenden Erfindung, ein verbessertes Konzept zum Beenden einer Bankettfahrt eines Kraftfahrzeugs anzugeben, welches es ermöglicht, die Bankettfahrt schneller, sicherer oder zuverlässiger zu beenden.

Diese Aufgabe wird gelöst durch ein Verfahren, ein System und ein Computerprogramm nach den unabhängigen Ansprüchen. Vorteilhafte Weiterbildungen und weitere Ausführungsformen sind Gegenstand der abhängigen Ansprüche.

Das verbesserte Konzept beruht auf der Idee, im Falle einer Bankettfahrt, eine Lenkintensität eines manuellen Lenkmanövers eines Fahrers zu bestimmen und das Lenkmanöver entsprechend der Lenkintensität zu klassifizieren. Abhängig von der Klassifizierung wird ein automatischer Eingriff in die Fahrzeugsteuerung vorgenommen.

Gemäß einem unabhängigen Aspekt des verbesserten Konzept, wird ein Verfahren zum Beenden einer Bankettfahrt eines Kraftfahrzeugs bereitgestellt, wobei- mittels einer Detektionseinheit des Kraftfahrzeugs erkannt wird, dass sich das Kraftfahrzeug wenigstens teilweise in einem Bankett befindet, und dazu mittels eines Systems der Detektionseinheit zur Detektion einer Fahrzeugzustandsgröße ein Kennwert für eine Wahrscheinlichkeit dafür errechnet wird, dass sich wenigstens ein Rad des Kraftfahrzeugs in dem Bankett befindet, wobei dazu ein zeitlicher Verlauf einer Raddrehzahl, eines Radschlupfs, einer Querbeschleunigung, einer Längsbeschleunigung und/oder einer Vertikalbeschleunigung des Kraftfahrzeugs, einer Gierrate des Kraftfahrzeugs, eines Einfederwegs eines oder mehrerer Räder des Kraftfahrzeugs oder einer Dämpferbeschleunigung eines oder mehrerer Dämpfer des Kraftfahrzeugs bestimmt wird;-eine Lenkintensität eines manuellen Lenkmanövers mittels einer Lenksensoreinheit des Kraftfahrzeugs bestimmt wird;- dem Lenkmanöver abhängig von der Lenkintensität mittels einer Recheneinheit des Kraftfahrzeugs eine von wenigstens zwei vorgegebenen Lenkkennzahlen zugeordnet wird; und- abhängig von der zugeordneten Lenkkennzahl mittels einer Steuereinheit des Kraftfahrzeugs ein automatischer Eingriff in eine Fahrzeugsteuerung vorgenommen wird.

Das manuelle Lenkmanöver beinhaltet insbesondere eine manuelle Betätigung eines Lenkrads oder eines alternativen Lenkelements durch den Fahrer, insbesondere in Reaktion auf das Vorliegen der Bankettfahrt.

Die Lenkintensität kann beispielsweise von einem Wert eines Lenkwinkels, einer Lenkwinkelbeschleunigung und/oder Lenkwinkelgeschwindigkeit während des manuellen Lenkmanövers abhängen.

Dass sich das Kraftfahrzeug wenigstens teilweise in dem Bankett befindet, kann derart verstanden werden, dass das Kraftfahrzeug mit wenigstens einem Rad des Kraftfahrzeugs in dem Bankett fährt.

Unter einer Bankettfahrt eines Kraftfahrzeugs kann hier und im Folgenden verstanden werden, dass sich wenigstens ein Rad des Kraftfahrzeugs während einer Fahrt des Kraftfahrzeugs auf oder in einem Bankett befindet, während sich wenigstens ein weiteres Rad des Kraftfahrzeugs, insbesondere ein auf einer bezüglich des Rades gegenüberliegenden Seite des Kraftfahrzeugs befindliches weiteres Rad, nicht in dem Bankett, sondern insbesondere auf einer Fahrbahn befindet. Insbesondere befinden sich bei einem Kraftfahrzeug mit vier Rädern bei einer Bankettfahrt beispielsweise ein rechtes oder ein linkes Rad im Bankett, während sich alle anderen Räder auf der Fahrbahn befinden oder es befinden sich beide rechten Räder oder beide linken Räder im Bankett, während sich die übrigen beiden Räder jeweils auf der Fahrbahn befinden.

Unter einer Fahrbahn kann hier und im Folgenden ein befestigter Bereich verstanden werden, der für einen regulären Kraftfahrzeugverkehr vorgesehen ist, also insbesondere eine befestigte Straße, beispielsweise eine asphaltierte Straße, eine Betonstraße oder eine Pflasterstraße.

Unter einem Bankett kann hier und im Folgenden ein unbefestigter Bereich neben der Fahrbahn, insbesondere seitlich neben der Fahrbahn, verstanden werden. Das Bankett kann beispielsweise einen Rasenbelag, einen Schotterbelag, einen Schotterrasen oder einen anderen, nicht befestigten Belag aufweisen. Insbesondere unterscheidet sich eine Oberflächenbeschaffenheit des Banketts von der Oberflächenbeschaffenheit der Fahrbahn.

Insbesondere unterscheiden sich jeweilige Reibwerte eines Rads des Kraftfahrzeugs auf der Fahrbahn beziehungsweise auf dem Bankett. Der Reibwert auf der Fahrbahn ist insbesondere höher als der Reibwert auf dem Bankett. Bei einer Bankettfahrt liegt dementsprechend eine sogenannte µ-Splitsituation vor.

Die Detektionseinheit kann beispielsweise ein Kamerasystem und/oder ein System zur Detektion einer Radbewegung des Kraftfahrzeugs beinhalten. Die Detektionseinheit wird als in System zur Detektion einer Fahrzeugzustandsgröße ausgestaltet, wie beispielsweise einer Fahrzeugbeschleunigung, einer Gierrate, einer Raddrehzahl oder ein Sensorsystem zur Identifizierung einer Beschaffenheit der Fahrbahnoberfläche beinhalten. Damit wird durch die Detektionseinheit, insbesondere zusammen mit der Recheneinheit, einen Kennwert für eine Wahrscheinlichkeit dafür berechnet , dass sich wenigstens ein Rad des Kraftfahrzeugs im Bankett befindet. Dazu wird ein zeitlicher Verlauf der Raddrehzahl, eines Radschlupfs, einer Querbeschleunigung, einer Längsbeschleunigung und/oder einer Vertikalbeschleunigung des Kraftfahrzeugs, einer Gierrate des Kraftfahrzeugs, eines Einfederwegs eines oder mehrerer Räder des Kraftfahrzeugs oder einer Dämpferbeschleunigung eines oder mehrerer Dämpfer, insbesondere Raddämpfer, des Kraftfahrzeugs bestimmt.

Wenn die Detektionseinheit ein optisches System, ein optisches Sensorsystem, beispielsweise ein Kamerasystem oder ein Lidarsystem, oder ein Radarsystem aufweist, können damit beispielsweise eine Umgebung des Kraftfahrzeugs überwacht werden und eine Fahrbahnstreifenmarkierung, eine Fahrbahnkante oder andere Infrastrukturmerkmale in der Umgebung des Kraftfahrzeugs erkannt werden, und basierend darauf kann die Position des Kraftfahrzeugs lateral bezüglich der Fahrbahn oder der Fahrbahngrenzen bestimmt werden. Auch auf diese Weise kann das Vorliegen der Bankettfahrt detektiert werden.

Bei dem automatischen Eingriff in die Fahrzeugsteuerung kann es sich, in Abhängigkeit von der zugeordneten Lenkkennzahl, um einen Eingriff mit einer Wirkung, welche dem manuellen Lenkmanöver entgegengesetzt ist, handeln oder um einen Eingriff mit einer Wirkung, welche das manuelle Lenkmanöver unterstützt.

Die wenigstens zwei vorgegebenen Lenkkennzahlen können beispielsweise zwei oder drei Lenkkennzahlen beinhalten, beispielsweise eine erste, eine zweite und eine dritte Lenkkennzahl. Die Kennzahlen können beispielsweise zur Festlegung von entsprechenden Fahrerreaktionsklassen einer Reaktion des Fahrers auf das Vorliegen der Bankettfahrt, also einer Fahrerreaktion, verstanden werden. Die Fahrerreaktion beinhaltet das manuelle Lenkmanöver und kann gegebenenfalls weitere manuelle Manöver beinhalten, beispielsweise ein manuelles Bremsmanöver oder ein manuelles Antriebs- oder Beschleunigungsmanöver des Fahrers.

Beispielsweise kann die erste Fahrerreaktionsklasse oder erste Lenkkennzahl einer nicht vorhandenen, ausbleibenden, nicht signifikanten oder nicht ausreichenden Fahrerreaktion entsprechen. Die zweite Fahrerreaktionsklasse oder zweite Lenkkennzahl kann beispielsweise einer angemessenen Fahrerreaktion entsprechen, welche insbesondere ein Übersteuern oder ein Schleudern des Kraftfahrzeugs oder einen Kontrollverlust des Fahrers über das Kraftfahrzeug nicht erwarten lässt. Die dritte Fahrerreaktionsklasse oder dritte Lenkkennzahl kann beispielsweise einer übermäßigen Fahrerreaktion entsprechen. Bei der übermäßigen Fahrerreaktion muss beispielsweise mit einem Übersteuern oder einem Schleudern des Kraftfahrzeugs oder einem Kontrollverlust des Fahrers über das Kraftfahrzeug gerechnet werden.

Insbesondere kann der automatische Eingriff im Falle der zweiten Fahrerreaktionsklasse, also bei einer angemessenen Fahrerreaktion, das manuelle Lenkmanöver unterstützen und im Falle der dritten Fahrerreaktionsklasse, also bei einer übermäßigen Fahrerreaktion, das manuelle Lenkmanöver des Fahrers abschwächen, ihm also entgegenwirken.

Gemäß einem Verfahren zum Beenden einer Bankettfahrt nach dem verbesserten Konzept kann die Fahrerreaktion anhand der Lenkintensität des manuellen Lenkmanövers genau bestimmt und eingeordnet werden. Je nach Fahrerreaktion können unterschiedlich wirkende automatische Korrekturen oder Eingriffe in die Fahrzeugsteuerung vorgenommen werden. Dass dies vorteilhaft ist, geht letztlich zurück auf das Vorliegen der µ-Splitsituation.

In einem Verfahren nach dem verbesserten Konzept wird die Lenkintensität als wichtige Einflussgröße für das Verhalten des Kraftfahrzeugs beim Beenden der µ-Splitsituation, insbesondere beim Auftreten des Reibwertsprungs differenziert berücksichtigt.

Der Fahrer kann, beispielsweise wenn er das Vorliegen der Bankettfahrt erkennt, durch übermäßiges Lenken und/oder Bremsen reagieren. In einem solchen Fall, welcher insbesondere bei einer hohen Lenkintensität auftreten kann, kann mittels des Verfahrens anhand der Steuereinheit der entgegengesetzte Eingriff in die Fahrzeugsteuerung vorgenommen werden, um die Überreaktion des Fahrers abzuschwächen. Reagiert der Fahrer jedoch angemessen oder sogar weniger intensiv als angemessen, kann es sinnvoll sein, den Fahrer durch den Eingriff in die Fahrzeugsteuerung zu unterstützen, also gemäß die Wirkung des manuellen Lenkmanövers zu verstärken. Beide Situationen werden in einem Verfahren nach dem verbesserten Konzept abgedeckt und die Bankettfahrt jeweils möglichst schnell, sicher und zuverlässig beendet.

Durch die differenzierte Berücksichtigung der Lenkintensität kann auf die Fahrerreaktion im konkreten Einzelfall spezifisch eingegangen werden, was zum einen die Sicherheit beim Beenden der Bankettfahrt erhöht, zum anderen, insbesondere im Falle einer angemessenen Fahrerreaktion, das Beenden der Bankettfahrt beschleunigen und einem Übersteuern des Kraftfahrzeugs bereits vorab entgegenwirken kann.

Gemäß zumindest einer Ausführungsform des Verfahrens zum Beenden der Bankettfahrt wird zur Bestimmung der Lenkintensität ein Lenkwinkel des Lenkmanövers, insbesondere mittels eines Lenkwinkelsensors des Kraftfahrzeugs, bestimmt. Dem Lenkmanöver wird die erste Lenkkennzahl der Lenkkennzahlen zugeordnet, wenn ein Betrag des Lenkwinkels kleiner oder gleich einem vorgegebenen ersten Lenkwinkelgrenzwert ist.

Der erste Lenkwinkelgrenzwert entspricht insbesondere einem Lenkwinkel, der von dem manuellen Lenkmanöver mindestens erreicht werden muss, damit das Lenkmanöver als solches erkannt oder identifiziert wird, beziehungsweise damit eine Absicht des Fahrers, das Kraftfahrzeugs aus dem Bankett zu lenken, festgestellt wird. Dementsprechend wird dem Lenkmanöver die erste Kennzahl beispielsweise dann zugeordnet, wenn anhand des bestimmten Lenkwinkels des Lenkmanövers festgestellt wird, dass der Fahrer das Kraftfahrzeug nicht aus dem Bankett lenkt.

Insbesondere kann es sich bei dem Lenkwinkelsensor um einen Lenkwinkelsensor handeln, den auch ein Fahrwerkregelsystem, ESC, nutzt, um den Lenkwinkel zu erkennen und zu analysieren, und mit der tatsächlichen Bewegungsrichtung des Kraftfahrzeugs zu vergleichen. Folgt das Fahrzeug beispielsweise nicht dem vom Fahrer eingestellten Lenkwinkel, was einem Untersteuern oder einem Übersteuern des Kraftfahrzeugs entspricht, kann das ESC-System die vom Fahrer gewünschte Bewegungsrichtung durch radselektive Bremseingriffe einstellen.

Auch ein Müdigkeitsassistenzsystem des Kraftfahrzeugs kann das Lenkverhalten des Fahrers analysieren und dazu gegebenenfalls denselben Lenkwinkelsensor einsetzen.

Dementsprechend kann mit Vorteil das Vorhandensein des Lenkwinkelsensors für andere Fahrerassistenzsysteme bei einem Verfahren zum Beenden der Bankettfahrt ausgenutzt werden, sodass ein Synergieeffekt und eine entsprechende Kosteneinsparung möglich sind.

Der Lenkwinkel wird zur Bestimmung der Lenkintensität insbesondere während eines vorgegebenen Zeitintervalls kontinuierlich oder wiederholt bestimmt. Dem Lenkmanöver wird die erste Lenkkennzahl insbesondere dann zugeordnet, wenn mittels des Lenkwinkelsensors festgestellt wird, dass der Betrag des Lenkwinkels während des gesamten Zeitintervalls kleiner oder gleich dem Lenkwinkelgrenzwert ist.

Bei dem Lenkwinkel handelt es sich um einen besonders aussagekräftigen Parameter zur Charakterisierung der Lenkintensität. Je größer der Lenkwinkel, desto größer ist tendenziell die Lenkintensität.

Gemäß zumindest einer Ausführungsform wird zur Bestimmung der Lenkintensität eine Lenkwinkelgeschwindigkeit des Lenkmanövers bestimmt. Dem Lenkmanöver wird eine zweite Lenkkennzahl der wenigstens zwei Lenkkennzahlen zugeordnet, wenn der Betrag des Lenkwinkels größer ist als der erste Lenkwinkelgrenzwert, insbesondere wenigstens einmal während des Zeitintervalls, und ein Betrag der Lenkwinkelgeschwindigkeit kleiner oder gleich einem vorgegebenen Lenkgeschwindigkeitsgrenzwert ist, insbesondere während des gesamten Zeitintervalls.

Die Lenkwinkelgeschwindigkeit kann dabei insbesondere mittels eines Lenkgeschwindigkeitssensor bestimmt werden, wobei der Lenkwinkelsensor beispielsweise dazu eingerichtet ist, auch die Lenkwinkelgeschwindigkeit zu bestimmen oder die Recheneinheit beispielsweise dazu eingerichtet ist, aus dem bestimmten Lenkwinkel und dessen zeitlichen Verlauf die Lenkwinkelgeschwindigkeit zu berechnen.

Dadurch, dass der Lenkwinkel größer ist als der erste Lenkwinkelgrenzwert, wird in einem solchen Fall beispielsweise festgestellt, dass der Fahrer das Kraftfahrzeug aus dem Bankett lenkt. Damit ist jedoch noch nicht bestimmt, ob der Fahrer angemessen oder übermäßig reagiert.

Der Lenkgeschwindigkeitsgrenzwert entspricht beispielsweise einem Grenzwert, der überschritten werden muss, damit von einer übermäßigen Fahrerreaktion ausgegangen werden kann. Ist der Betrag der Lenkwinkelgeschwindigkeit also während des Zeitintervalls stets kleiner oder gleich dem Lenkgeschwindigkeitsgrenzwert, so liegt auch bei Überschreiten des ersten Lenkwinkelgrenzwerts durch den Lenkwinkel mit hoher Wahrscheinlichkeit eine angemessene Lenk- oder Fahrerreaktion vor.

Die zweite Lenkkennzahl wird dem Lenkmanöver also dann zugeordnet, wenn von einer angemessenen Lenkreaktion oder Lenkintensität der Fahrerreaktion ausgegangen werden kann.

Durch die Berücksichtigung von Lenkwinkel und Lenkwinkelgeschwindigkeit kann eine insgesamt verbesserte und genauere Aussage über die Lenkintensität getroffen werden. Die Einordnung in verschiedene Lenkintensitätsklassen beziehungsweise die Zuordnung der verschiedenen Lenkkennzahlen erlaubt eine genauere Einordnung der Fahrerreaktion und entsprechend einen spezifischeren automatischen Eingriff.

Gemäß zumindest einer Ausführungsform wird dem Lenkmanöver die zweite Kennzahl zugeordnet, wenn der Betrag des Lenkwinkels größer ist als der erste Lenkwinkelgrenzwert, insbesondere wenigstens einmal während des vorgegebenen Zeitintervalls, und kleiner oder gleich einem vorgegebenen zweiten Lenkwinkelgrenzwert, insbesondere während des gesamten Intervalls, und der Betrag der Lenkwinkelgeschwindigkeit größer ist als der Lenkgeschwindigkeitsgrenzwert, insbesondere wenigstens einmal während des vorgegebenen Zeitintervalls.

In diesem Fall liegt eine angemessene Fahrerreaktion vor, obwohl die Lenkwinkelgeschwindigkeit größer ist als der Lenkgeschwindigkeitsgrenzwert, weil der Lenkwinkel den zweiten Lenkwinkelgrenzwert nicht überschreitet. Das heißt, auch eine hohe Lenkwinkelgeschwindigkeit allein lässt nicht notwendigerweise auf eine übermäßige Reaktion des Fahrers schließen, vielmehr bedarf es dazu auch eines entsprechend großen Lenkwinkels.

Gemäß zumindest einer Ausführungsform wird der Lenkaktion eine dritte Lenkkennzahl der wenigstens zwei vorgegebenen Lenkkennzahlen zugeordnet, wenn der Betrag des Lenkwinkels größer ist als der erste Lenkwinkelgrenzwert und größer als der zweite Lenkwinkelgrenzwert, insbesondere jeweils wenigstens einmal während des vorgegebenen Zeitintervalls, und der Betrag der Lenkwinkelgeschwindigkeit, insbesondere wenigstens einmal während des Zeitintervalls, größer ist als der Lenkgeschwindigkeitsgrenzwert.

Die dritte Lenkkennzahl wird der Lenkaktion zugeordnet, wenn eine übermäßige Fahrerreaktion, insbesondere ein übermäßiges Lenkmanöver des Fahrers, festgestellt wird. Das Überschreiten des zweiten Lenkwinkelgrenzwerts in Kombination mit dem Überschreiten des Lenkgeschwindigkeitsgrenzwerts lässt entsprechend auf eine übermäßige Reaktion des Fahrers schließen.

Falls die Lenkwinkelgeschwindigkeit größer ist als der Lenkwinkelgrenzwert, wird also insbesondere berücksichtigt, um wieviel größer der Lenkwinkel ist als der erste Lenkwinkelgrenzwert, insbesondere ob er größer ist als der zweite Lenkwinkelgrenzwert.

In den beschriebenen Ausführungsformen wird insgesamt eine differenzierte und detaillierte Auswertung und Klassifizierung mit Einordnung des Lenkverhaltens, insbesondere des Lenkmanövers des Fahrers ermöglicht. Das Lenkverhalten des Fahrers stellt einen entscheidenden Parameter zur Charakterisierung der Intensität der Fahrerreaktion dar.

Gemäß zumindest einer Ausführungsform wird mittels einer Bremssensoreinheit des Kraftfahrzeugs eine Bremsintensität eines manuellen Bremsmanövers des Fahrers bestimmt. Dem Bremsmanöver wird abhängig von der Bremsintensität mittels der Recheneinheit eine von wenigstens zwei vorgegebenen Bremskennzahlen zugeordnet.

Der automatische Eingriff in die Fahrzeugsteuerung wird abhängig von der zugeordneten Bremskennzahl, welche dem Bremsmanöver zugeordnet wurde, und abhängig von der Lenkkennzahl vorgenommen.

Durch die Berücksichtigung des Bremsverhaltens in Form des manuellen Bremsmanövers des Fahrers wird eine genauere Differenzierung und Zuordnung der Fahrerreaktion und eine noch spezifischere Abstimmung des automatischen Eingriffs auf die konkrete Einzelfallsituation ermöglicht.

Insbesondere richtet sich in solchen Ausführungsformen der automatische Eingriff, also ob der Eingriff durchgeführt wird, und wenn ja, ob er derart durchgeführt wird, dass er die Fahrerreaktion unterstützt oder ihr entgegenwirkt, abhängig von der zugeordneten Bremskennzahl vorgenommen.

Gemäß zumindest einer Ausführungsform wird zur Bestimmung der Bremsintensität ein Bremspedalweg während des Bremsmanövers und/oder eine Bremspedalgeschwindigkeit während des Bremsmanövers und/oder ein Bremsdruck des Bremsmanövers, mittels der Bremssensoreinheit bestimmt.

Bremspedalweg, Bremspedalgeschwindigkeit und Bremsdruck stellen jeweils geeignete Parameter dar, um eine Intensität des Bremsmanövers zu bestimmen. Je höher der Bremsdruck, je größer die Bremspedalgeschwindigkeit und je größer der Bremspedalweg des Bremsmanövers sind, desto größer ist die Bremsintensität.

Je größer die Bremsintensität, desto höher ist die Wahrscheinlichkeit, dass eine übermäßige Fahrerreaktion vorliegt und desto eher kann es sinnvoll sein, den automatischen Eingriff als der Fahrerreaktion, insbesondere dem manuellen Lenkmanöver, entgegen wirkend durchzuführen.

Gemäß zumindest einer Ausführungsform werden die Bremskennzahl und die Lenkkennzahl, welche dem Bremsmanöver beziehungsweise dem Lenkmanöver zugeordnet wurden, gemäß einem vorgebenden Satz von Gewichtungsfaktoren mittels der Recheneinheit gewichtet. Eine Fahrerreaktionsklasse von wenigstens zwei vorgegebenen Fahrerreaktionsklassen wird in Abhängigkeit von der gewichteten Bremskennzahl und der gewichteten Lenkkennzahl mittels der Recheneinheit bestimmt. Der Eingriff in die Fahrzeugsteuerung wird abhängig von der bestimmten Fahrerreaktionsklasse vorgenommen.

Die Lenkkennzahl stellt insbesondere eine Indikation dafür dar, welche Reaktion des Fahrers vorliegt, also ob der Fahrer das Kraftfahrzeug aus dem Bankett lenkt und falls ja, ob es sich um eine angemessene oder eine übermäßige Reaktion des Fahrers handelt. Die Bremsintensität kann zusätzlichen Einfluss auf die genaue Klassifizierung der Fahrerreaktion haben. Insbesondere kann bei der Gewichtung der Lenkkennzahl ein größeres Gewicht zukommen als der Bremskennzahl.

Mit anderen Worten ist es notwendig, die Lenkintensität zu erfassen, um zu erkennen, ob der Fahrer das Kraftfahrzeug aus dem Bankett lenkt. Die Bremsintensität alleine reicht hierfür gegebenenfalls nicht aus.

Gemäß zumindest einer Ausführungsform wird eine Antriebsintensität eines manuellen Antriebsmanövers des Fahrers mittels einer Fahrpedalsensoreinheit des Kraftfahrzeugs bestimmt und dem Antriebsmanöver wird abhängig von der Antriebsintensität mittels der Recheneinheit eine von wenigstens zwei vorgegebenen Antriebskennzahlen zugeordnet. Der Eingriff in die Fahrzeugsteuerung wird abhängig von der zugeordneten Antriebskennzahl, welche dem Antriebsmanöver zugeordnet wurde, vorgenommen.

Bei dem Antriebsmanöver handelt es sich insbesondere um die Betätigung eines Fahrpedals oder Gaspedals des Kraftfahrzeugs. Bei der Antriebsintensität handelt es sich insbesondere um eine Intensität der Betätigung des Fahrpedals.

Zur Bestimmung der Antriebsintensität kann beispielsweise ein Fahrpedalweg während des Antriebsmanövers und/oder eine Fahrpedalgeschwindigkeit während des Antriebmanövers bestimmt werden.

Gemäß zumindest einer Ausführungsform werden die Bremskennzahl, die Lenkkennzahl und die Antriebskennzahl gemäß dem vorgegebenen Satz von Gewichtungsfaktoren mittels der Recheneinheit gewichtet, die Fahrerreaktionsklasse wird in Abhängigkeit von der gewichteten Bremskennzahl, der gewichteten Lenkkennzahl und der gewichteten Antriebskennzahl mittels der Recheneinheit bestimmt und der Eingriff in die Fahrzeugsteuerung wird abhängig von der bestimmten Fahrerreaktionsklasse vorgenommen.

Durch die Berücksichtigung der Betätigung des Fahrpedals werden eine weitere Differenzierung und eine weitere genauere Einordnung der Fahrerreaktion ermöglicht. Die Erläuterungen bezüglich des Bremsmanövers gelten analog auch für das Antriebsmanöver. Insbesondere kann die Antriebskennzahl bei der Gewichtung der Kennzahlen schwächer gewichtet werden als die Bremskennzahl.

Gemäß zumindest einer Ausführungsform wird mittels der Steuereinheit der automatische Eingriff als ein dem manuellen Lenkmanöver entgegengesetzter Eingriff vorgenommen, wenn die bestimmte Fahrerreaktionsklasse einer ersten Fahrerreaktionsklasse der wenigstens zwei Fahrerreaktionsklassen entspricht. Der automatische Eingriff wird als ein das manuelle Lenkmanöver unterstützender Eingriff vorgenommen, wenn die bestimmte Fahrerreaktionsklasse einer zweiten Fahrerreaktionsklasse der wenigstens zwei Fahrerreaktionsklassen entspricht.

Die erste Fahrerreaktionsklasse entspricht dabei insbesondere einer übermäßigen Fahrerreaktion, die ein Übersteuern oder einen Kontrollverlust des Kraftfahrzeugs, insbesondere beim Beenden der Bankettfahrt, mit höherer Wahrscheinlichkeit erwarten lässt. Die zweite Fahrerreaktionsklasse entspricht insbesondere einer Fahrerreaktion, welche als angemessen angesehen wird, um die Bankettfahrt ohne Kontrollverlust über das Kraftfahrzeug zu beenden.

Gemäß zumindest einer Ausführungsform wird kein Eingriff in die Fahrzeugsteuerung automatisch vorgenommen, wenn die bestimmte Fahrerreaktionsklasse einer dritten Fahrerreaktionsklasse der wenigstens zwei Fahrerreaktionsklassen entspricht.

Die dritte Fahrerreaktionsklasse entspricht einer Fahrerreaktion, die darauf schließen lässt, dass der Fahrer keine Maßnahmen eingeleitet hat, um das Kraftfahrzeug aus dem Bankett zu fahren. In einer solchen Situation könnte es die Sicherheit gefährden, dennoch einen automatischen Eingriff, welcher für den Fahrer gegebenenfalls überraschend sein kann, durchzuführen.

Beispielsweise kann, wenn die Fahrerreaktionsklasse der dritten Fahrerreaktionsklasse entspricht, mittels der Recheneinheit ein Warnsignal an den Fahrer ausgegeben werden, um den Fahrer auf das Vorliegen der Bankettfahrt hinzuweisen oder ihn zum Ergreifen von Maßnahmen aufzufordern, um die Bankettfahrt zu beenden.

Gemäß einem weiteren unabhängigen Aspekt des verbesserten Konzepts wird ein System zum Beenden einer Bankettfahrt eines Kraftfahrzeugs bereitgestellt, wobei das System eine Detektionseinheit beinhaltet, dazu eingerichtet, zu erkennen, dass sich das Kraftfahrzeug wenigstens teilweise in einem Bankett befindet, wobei die Detektionseinheit dazu eingerichtet ist, mittels eines ein Systems der Detektionseinheit zur Detektion einer Fahrzeugzustandsgröße einen Kennwert für eine Wahrscheinlichkeit dafür zu errechnen, dass sich wenigstens ein Rad des Kraftfahrzeugs in dem Bankett befindet, und dazu einen zeitlichen Verlauf einer Raddrehzahl, eines Radschlupfs, einer Querbeschleunigung, einer Längsbeschleunigung und/oder einer Vertikalbeschleunigung des Kraftfahrzeugs, einer Gierrate des Kraftfahrzeugs, eines Einfederwegs eines oder mehrerer Räder des Kraftfahrzeugs oder einer Dämpferbeschleunigung eines oder mehrerer Dämpfer des Kraftfahrzeugs zu bestimmen;- eine Lenksensoreinheit beinhaltet, dazu eingerichtet, eine Lenkintensität eines manuellen Lenkmanövers zu bestimmen;- eine Recheneinheit beinhaltet, dazu eingerichtet, dem Lenkmanöver abhängig von der Lenkintensität eine von wenigstens zwei vorgegebenen Lenkkennzahlen zuzuordnen; und- eine Steuereinheit beinhaltet, dazu eingerichtet, abhängig von der zugeordneten Lenkkennzahl einen automatischen Eingriff in eine Fahrzeugsteuerung vorzunehmen.

Weitere Ausführungsformen des Systems zum Beenden der Bankettfahrt nach dem verbesserten Konzept folgen unmittelbar aus den verschiedenen Ausgestaltungsformen des Verfahrens zum Beenden der Bankettfahrt nach dem verbesserten Konzept und umgekehrt. Insbesondere kann das System nach dem verbesserten Konzept zum Durchführen eines Verfahrens nach dem verbesserten Konzept eingerichtet oder programmiert sein oder das System führt ein Verfahren nach dem verbesserten Konzept durch.

Gemäß einem weiteren unabhängigen Aspekt des verbesserten Konzepts wird ein Computerprogramm mit Befehlen angegeben. Wenn das Computerprogramm von einem System gemäß dem verbesserten Konzept, insbesondere von einer Recheneinheit des Systems, ausgeführt wird, veranlassen die Befehle das System dazu, ein Verfahren zum Beenden einer Bankettfahrt nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Gemäß einem weiteren unabhängigen Aspekt des verbesserten Konzepts wird ein Kraftfahrzeug angegeben, welches ein System zum Beenden einer Bankettfahrt und/oder ein computerlesbares Speichermedium nach dem verbesserten Konzept beinhaltet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Systems beschrieben worden sind. Aus diesem Grund sind die entsprechenden Weiterbildungen des erfindungsgemäßen Verfahrens gegebenenfalls nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigen:
- Fig. 1: ein Kraftfahrzeug mit einer beispielhaften Ausführungsform eines Systems zum Beenden einer Bankettfahrt nach dem verbesserten Konzept;
- Fig. 2: ein Ablaufdiagramm einer beispielhaften Ausführungsform eines Verfahrens nach dem verbesserten Konzept; und
- Fig. 3: ein Ablaufdiagramm eines Teils einer weiteren beispielhaften Ausführungsform eines Verfahrens zum Beenden einer Bankettfahrt nach dem verbesserten Konzept.
Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

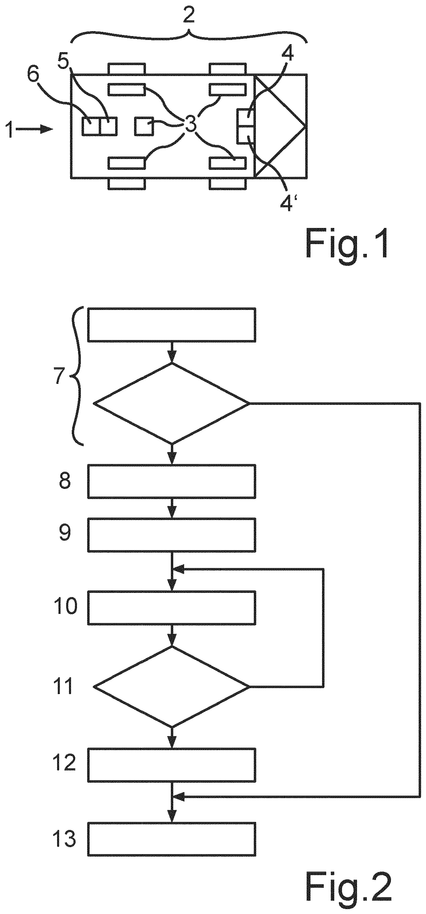

In Fig. 1 ist ein Kraftfahrzeug 1 mit einer beispielhaften Ausführungsform eines Systems 2 zum Beenden einer Bankettfahrt des Kraftfahrzeugs 1 nach dem verbesserten Konzept gezeigt.

Das System 2 weist eine Detektionseinheit 3 auf, welche mehrere Sensoren oder Sensoreinheiten beinhalten kann, die Radbewegungen der Räder des Kraftfahrzeugs 1 und/oder Fahrzeugzustandsgrößen des Kraftfahrzeugs 1, beispielsweise eine Quer-, Longitudinal- oder Vertikalbeschleunigung, eine Dreh- oder Gierrate des Kraftfahrzeugs oder dergleichen bestimmen können. Die Detektionseinheit 3 kann auch ein Kamerasystem oder ein optisches Sensorsystem beinhalten, um eine Umgebung des Kraftfahrzeugs 1 zu überwachen und beispielsweise Infrastrukturmerkmale in der Umgebung, wie zum Beispiel eine Fahrstreifenmarkierungslinie oder eine Fahrbahnkante, zu erkennen. Anhand jeweiliger Sensorsignale der Sensoren oder Sensoreinheiten der Detektionseinheit 3 kann diese erkennen, ob sich ein Rad des Kraftfahrzeugs 1 in dem Bankett befindet.

Das System 2 beinhaltet außerdem eine Lenksensoreinheit 4, welche einen Lenkwinkel eines Lenkrads des Kraftfahrzeugs 1 und eine Lenkwinkelgeschwindigkeit des Lenkrads bestimmen kann, insbesondere um eine Lenkintensität eines manuellen Lenkmanövers des Fahrers des Kraftfahrzeugs 1 zu bestimmen.

Optional weist das System 2 eine Bremssensoreinheit 4' auf, welche beispielsweise eine Bremspedalgeschwindigkeit, einen Bremsdruck und/oder einen Bremspedalweg eines Bremspedals des Kraftfahrzeugs 1 bestimmen kann, um eine Bremsintensität eines manuellen Bremsmanövers des Fahrers zu bestimmen.

Das System 2 weist außerdem eine Recheneinheit 5 auf, die dazu eingerichtet ist, abhängig von den Messwerten der Lenksensoreinheit 4 und optional abhängig von dem Messwerten der Bremssensoreinheit 4' einem Lenkmanöver des Fahrers abhängig von der Lenkintensität eine von wenigstens zwei vorgegebenen Lenkkennzahlen zuzuordnen und gegebenenfalls dem Bremsmanöver eine von wenigstens zwei vorgegebenen Bremskennzahlen zuzuordnen.

Das System 2 beinhaltet auch eine Steuereinheit 6, welche abhängig von der Lenkkennzahl und optional zusätzlich abhängig von der Bremskennzahl einen automatischen Eingriff in eine Fahrzeugsteuerung, insbesondere in ein Lenk- oder Bremssystem des Kraftfahrzeugs 1, vornehmen oder einleiten kann.

Optional beinhaltet das System 2 ein computerlesbares Speichermedium (nicht dargestellt), auf welchem beispielsweise ein Computerprogramm nach dem verbesserten Konzept gespeichert sein kann und auf welches die Recheneinheit 5 lesend zugreifen kann, um ein Verfahren nach dem verbesserten Konzept durchzuführen.

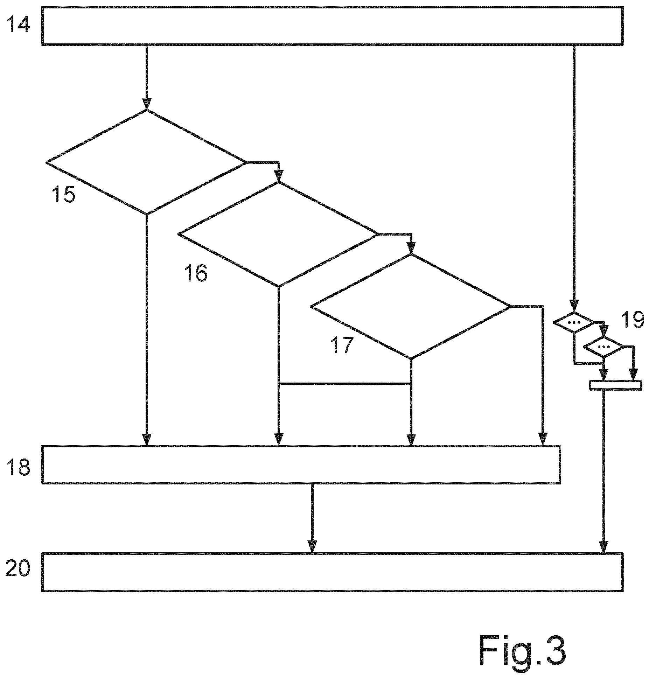

Die Funktion des Systems 2 wird im Folgenden anhand von beispielhaften Ausführungsformen eines Verfahrens zum Beenden einer Bankettfahrt nach dem verbesserten Konzept bezüglich der Fig. 2 und Fig. 3 näher erläutert.

In Fig. 2 ist ein Ablaufdiagramm eines Verfahrens zum Beenden der Bankettfahrt nach dem verbesserten Konzept gezeigt.

In dem Schritt 7 des Verfahrens wird anhand der Detektionseinheit 3 des Kraftfahrzeugs 1 erkannt, ob eine Bankettfahrt des Kraftfahrzeugs vorliegt, also ob sich insbesondere mindestens ein Rad des Kraftfahrzeugs 1 in dem Bankett befindet.

Wird in Schritt 7 festgestellt, dass keine Bankettfahrt vorliegt, so wird in Schritt 13 des Verfahrens die Normalfahrt des Kraftfahrzeugs 1 fortgesetzt.

Wird in Schritt 7 festgestellt, dass eine Bankettfahrt vorliegt, wird in Schritt 8 eine Fahrerreaktion ermittelt und klassifiziert, indem beispielsweise eine Fahrerreaktionsklasse bestimmt wird, welche beispielsweise von einer Lenkintensität eines manuellen Lenkmanövers des Fahrers und/oder von einer Bremsintensität eines manuellen Bremsmanövers des Fahrers abhängen kann.

Insbesondere wird in Schritt 8 bestimmt, ob der Fahrer das Kraftfahrzeug 1 aus dem Bankett lenkt. Ist dies der Fall, so wird in Schritt 8 außerdem bestimmt, ob das Lenk- und/oder das Bremsmanöver einer angemessenen Reaktion auf die Bankettfahrt entsprechen oder einer übermäßigen Reaktion. Dementsprechend wird die Fahrerreaktion einer ersten, einer zweiten oder einer dritten Fahrerreaktionsklasse zugeordnet.

Für weitere Einzelheiten zur Bestimmung der Fahrerreaktionsklasse wird auf die Erläuterungen zu Fig. 3 verwiesen.

In Schritt 9 des Verfahrens wird in Abhängigkeit von der Fahrerreaktionsklasse ein automatischer Eingriff in eine Fahrzeugsteuerung des Kraftfahrzeugs 1 mittels der Steuereinheit 6 vorgenommen.

Entspricht die Fahrerreaktionsklasse der ersten Fahrerreaktionsklasse, so bedeutet dies, dass eine übermäßige Reaktion des Fahrers vorliegt. In diesem Fall wird der automatische Eingriff derart durchgeführt, dass seine Wirkung der Fahrerreaktion, insbesondere dem Lenkmanöver des Fahrers, entgegengesetzt ist, also einer stabilisierenden Wirkung entspricht.

Dazu kann beispielsweise ein automatischer Eingriff in das Lenksystem des Kraftfahrzeugs 1 derart vorgenommen werden, dass in Richtung des Banketts gelenkt wird. Alternativ oder zusätzlich kann ein Einzelradbremseingriff an mindestens einem sich im Bankett befindenden Rad des Kraftfahrzeugs 1 vorgenommen werden.

Falls die Fahrerreaktionsklasse der zweiten Fahrerreaktionsklasse entspricht, liegt eine angemessene Reaktion des Fahrers vor. In diesem Fall wird der Eingriff in die Fahrzeugsteuerung beispielsweise derart durchgeführt, dass seine Wirkung der Wirkung der Fahrerreaktion, insbesondere des manuellen Lenkmanövers, gleichgerichtet ist, sodass der Eingriff beispielsweise eine agilisierende Wirkung hat.

Dies kann beispielsweise dadurch geschehen, dass ein Lenkeingriff zur Fahrbahn hin, also von dem Bankett weg, automatisch durchgeführt wird. Alternativ oder zusätzlich kann ein selektiver Einzelradbremseingriff an einem sich auf der Fahrbahn befindenden Rad des Kraftfahrzeugs 1 durchgeführt werden.

Falls die Fahrerreaktionsklasse einer dritten Fahrerreaktionsklasse entspricht, so wird darauf geschlossen, dass der Fahrer das Kraftfahrzeug 1 nicht aus dem Bankett lenkt. In diesem Fall wird beispielsweise kein Eingriff in die Fahrzeugsteuerung vorgenommen. Beispielsweise kann ein Warnsignal an den Fahrer ausgegeben werden.

In den Schritten 10 und 11 wird die Stabilisierung oder die Agilisierung, also insbesondere der jeweilige Eingriff in die Fahrzeugsteuerung, oder die Warnung fortgesetzt und geprüft, ob das Kraftfahrzeug 1 das Bankett verlassen hat. Ist dies nicht der Fall, werden die Schritte 10 und 11 iterativ wiederholt, bis das Fahrzeug 1 das Bankett verlassen hat. Hat das Kraftfahrzeug 1 das Bankett jedoch verlassen, wird in Schritt 12 der Eingriff beziehungsweise die Warnung beendet und in Schritt 13 wird die Normalfahrt fortgesetzt.

In Fig. 3 ist ein Ablaufdiagramm eines Teils einer weiteren beispielhaften Ausführungsform eines Verfahrens nach dem verbesserten Konzept gezeigt, insbesondere ein Teil, wie er in Schritt 8 des Verfahrens aus Fig. 2 durchgeführt werden kann.

In Schritt 14 des Verfahrens werden Signale der Lenksensoreinheit 4 und optional Signale der Bremssensoreinheit 4' von der Recheneinheit 5 erfasst. Insbesondere können der Lenkwinkel, die Lenkwinkelgeschwindigkeit, der Bremspedalweg, die Bremspedalgeschwindigkeit und/oder der Bremsdruck von der Recheneinheit 5 erfasst werden.

In Schritt 15 wird geprüft, ob der Betrag des Lenkwinkels während eines vorgegebenen Zeitintervalls, insbesondere während des gesamten Zeitintervalls, kleiner oder gleich einem vorgegebenen ersten Lenkwinkelgrenzwert ist. Ist dies der Fall, so wird daraus geschlossen, dass der Fahrer keine Maßnahmen eingeleitet hat, um das Kraftfahrzeug 1 aus dem Bankett zu lenken. Dem Lenkmanöver wird daher eine erste Lenkkennzahl zugeordnet und es wird mit Schritt 18 weiterverfahren.

Überschreitet der Lenkwinkel während des Zeitintervalls wenigstens einmal den ersten Lenkwinkelgrenzwert, so wird mit Schritt 16 weiterverfahren.

In Schritt 16 wird geprüft, insbesondere mittels der Recheneinheit 5, ob ein Betrag der Lenkwinkelgeschwindigkeit während des gesamten Zeitintervalls kleiner oder gleich einem Lenkgeschwindigkeitsgrenzwert ist. Ist dies der Fall, so wird daraus geschlossen, dass eine angemessene Lenkintensität, also ein angemessenes Lenkmanöver des Fahrers, vorliegt, dem Lenkmanöver wird eine zweite Lenkkennzahl zugeordnet und es wird mit Schritt 18 weiterverfahren. Wird dagegen festgestellt, dass der Lenkgeschwindigkeitsgrenzwert wenigstens einmal in dem Zeitintervall überschritten wurde, so wird mit Schritt 17 weiterverfahren.

In Schritt 17 wird überprüft, ob der Lenkwinkel während des gesamten Zeitintervalls kleiner oder gleich einem zweiten Lenkwinkelgrenzwert ist. Ist dies der Fall, wird, insbesondere trotz relativ großer Lenkwinkelgeschwindigkeit, darauf geschlossen, dass eine angemessene Lenkreaktion des Fahrers vorliegt, es wird dem Lenkmanöver die zweite Lenkkennzahl zugeordnet und es wird mit Schritt 18 weiterverfahren. Wird der zweite Lenkwinkelgrenzwert während des Zeitintervalls wenigstens einmal überschritten, so wird daraus geschlossen, dass eine übermäßige Lenkreaktion des Fahrers vorliegt, es wird die dritte Lenkkennzahl dem Lenkmanöver zugeordnet und mit Schritt 18 weiterverfahren.

In Schritt 18 wird mittels der Recheneinheit 5 dem Lenkmanöver die erste, die zweite oder die dritte Lenkkennzahl gemäß dem Ergebnis der Prüfungen in den Schritten 15 bis 17 zugeordnet und die Lenkkennzahl wird optional gewichtet.

In einem optionalen Schritt 19 wird eine Bremsintensität eines manuellen Bremsmanövers des Fahrers ermittelt. Abhängig von der ermittelten Bremsintensität, welche beispielsweise basierend auf dem Bremspedalweg, der Bremspedalgeschwindigkeit und/oder dem Bremsdruck bestimmt werden kann, wird eine Bremskennzahl bestimmt und optional ebenfalls gewichtet.

In Schritt 19 wird aus der Lenkkennzahl oder aus der gewichteten Lenkkennzahl zusammen mit der gewichteten Bremskennzahl die Fahrerreaktionsklasse bestimmt, wie bezüglich Fig. 2 erläutert.

Anhand der Lenksensoreinheit 4 und optional anhand der Bremssensoreinheit 4' sowie mittels vorgelagerter Softwaremodule kann also die Fahrerintention durch Ermitteln der Fahrereingaben am Lenkrad, am Bremspedal oder optional am Fahrpedal des Kraftfahrzeugs 1 ermittelt und dem Verfahren bereitgestellt werden. Die Prüfung in Schritt 15, ob der Fahrer das Kraftfahrzeug 1 aus dem Bankett lenkt, kann beispielsweise auf einem Bestimmen eines Vorzeichens des Lenkwinkels sowie der Information, ob sich die linken oder die rechten Räder des Kraftfahrzeugs 1 im Bankett befinden, beruhen.

Um das Lenkmanöver des Fahrers als übermäßig zu klassifizieren, müssen insbesondere zwei Bedingungen erfüllt sein. Der vorgegebene Lenkgeschwindigkeitsgrenzwert und der zweite Lenkwinkelgrenzwert müssen jeweils innerhalb des Zeitintervalls mindestens einmal überschritten worden sein.

In analoger Weise kann eine Fahrereinabe am Bremspedal und/oder am Fahrpedal klassifiziert werden.

Die Einzelklassifikationen können zu einer Gesamtfahrerreaktion zusammengefasst werden, welcher die Fahrerreaktionsklasse wie beschrieben zugeordnet werden kann. Sofern die Eingaben an Brems- und/oder Fahrpedal nicht zur Bestimmung der Fahrerreaktionsklasse herangezogen werden, ist die Fahrerreaktionsklasse bereits durch die Lenkkennzahl eindeutig festgelegt.

Wie beschrieben, wird mittels des verbesserten Konzepts eine Möglichkeit geschaffen, eine insbesondere auf den Einzelfall spezifisch zugeschnittene automatische Reaktion auf eine Bankettfahrt beziehungsweise eine entsprechende Fahrerreaktion einzuleiten. Die Bankettfahrt kann dadurch sicher, zuverlässig und schnell beendet werden.

## Patentansprüche

1. Verfahren zum Beenden einer Bankettfahrt eines Kraftfahrzeugs (1), wobei
- mittels einer Detektionseinheit (3) des Kraftfahrzeugs (1) erkannt wird, dass sich das Kraftfahrzeug (1) wenigstens teilweise in einem Bankett befindet, und dazu mittels eines Systems der Detektionseinheit (3) zur Detektion einer Fahrzeugzustandsgröße ein Kennwert für eine Wahrscheinlichkeit dafür errechnet wird, dass sich wenigstens ein Rad des Kraftfahrzeugs (1) in dem Bankett befindet, wobei dazu ein zeitlicher Verlauf einer Raddrehzahl, eines Radschlupfs, einer Querbeschleunigung, einer Längsbeschleunigung und/oder einer Vertikalbeschleunigung des Kraftfahrzeugs (1), einer Gierrate des Kraftfahrzeugs (1), eines Einfederwegs eines oder mehrerer Räder des Kraftfahrzeugs (1) oder einer Dämpferbeschleunigung eines oder mehrerer Dämpfer des Kraftfahrzeugs (1) bestimmt wird;
- eine Lenkintensität eines manuellen Lenkmanövers mittels einer Lenksensoreinheit (4) des Kraftfahrzeugs (1) bestimmt wird;
- dem Lenkmanöver abhängig von der Lenkintensität mittels einer Recheneinheit (5) des Kraftfahrzeugs (1) eine von wenigstens zwei vorgegebenen Lenkkennzahlen zugeordnet wird; und
- abhängig von der zugeordneten Lenkkennzahl mittels einer Steuereinheit (6) des Kraftfahrzeugs (1) ein automatischer Eingriff in eine Fahrzeugsteuerung vorgenommen wird.

2. Verfahren nach Anspruch 1,
**dadurch gekennzeichnet, dass**
- zur Bestimmung der Lenkintensität ein Lenkwinkel des Lenkmanövers bestimmt wird; und
- dem Lenkmanöver eine erste Lenkkennzahl der Lenkkennzahlen zugeordnet wird, wenn ein Betrag des Lenkwinkels kleiner oder gleich einem vorgegebenen ersten Lenkwinkelgrenzwert ist.

3. Verfahren nach Anspruch 2,
**dadurch gekennzeichnet, dass**
- zur Bestimmung der Lenkintensität eine Lenkwinkelgeschwindigkeit des Lenkmanövers bestimmt wird; und
- dem Lenkmanöver eine zweite Lenkkennzahl der Lenkkennzahlen zugeordnet wird, wenn
- der Betrag des Lenkwinkels größer als der erste Lenkwinkelgrenzwert ist; und
- ein Betrag der Lenkwinkelgeschwindigkeit kleiner oder gleich einem vorgegebenen Lenkgeschwindigkeitsgrenzwert ist.

4. Verfahren nach Anspruch 3,
**dadurch gekennzeichnet, dass**
- dem Lenkmanöver die zweite Lenkkennzahl zugeordnet wird, wenn
- der Betrag des Lenkwinkels größer als der erste Lenkwinkelgrenzwert und kleiner oder gleich einem vorgegebenen zweiten Lenkwinkelgrenzwert ist; und
- der Betrag der Lenkwinkelgeschwindigkeit größer als der Lenkgeschwindigkeitsgrenzwert ist; und
- der Lenkaktion eine dritte Lenkkennzahl der Lenkkennzahlen zugeordnet wird, wenn
- der Betrag des Lenkwinkels größer als der erste Lenkwinkelgrenzwert und größer als der zweite Lenkwinkelgrenzwert ist; und
- der Betrag der Lenkwinkelgeschwindigkeit größer als der Lenkgeschwindigkeitsgrenzwert ist.

5. Verfahren nach einem der Ansprüche 1 bis 4,
**dadurch gekennzeichnet, dass**
- eine Bremsintensität eines manuellen Bremsmanövers mittels einer Bremssensoreinheit (4') des Kraftfahrzeugs bestimmt wird;
- dem Bremsmanöver abhängig von der Bremsintensität mittels der Recheneinheit (5) eine von wenigstens zwei vorgegebenen Bremskennzahlen zugeordnet wird; und
- der automatische Eingriff in die Fahrzeugsteuerung abhängig von der zugeordneten Bremskennzahl vorgenommen wird.

6. Verfahren nach Anspruch 5,
**dadurch gekennzeichnet, dass**
zur Bestimmung der Bremsintensität ein Bremspedalweg des Bremsmanövers und/oder eine Bremspedalgeschwindigkeit des Bremsmanövers und/oder ein Bremsdruck des Bremsmanövers bestimmt werden

7. Verfahren nach einem der Ansprüche 5 oder 6,
**dadurch gekennzeichnet, dass**
- die Bremskennzahl und die Lenkkennzahl gemäß einem vorgegebenen Satz von Gewichtungsfaktoren mittels der Recheneinheit (3) gewichtet werden;
- eine Fahrerreaktionsklasse von wenigstens zwei vorgegebenen Fahrerreaktionsklassen in Abhängigkeit von der gewichteten Bremskennzahl und der gewichteten Lenckennzahl mittels der Recheneinheit (3) bestimmt wird; und
- der Eingriff in die Fahrzeugsteuerung abhängig von der bestimmten Fahrerreaktionsklasse vorgenommen wird.

8. Verfahren nach Anspruch 7,
**dadurch gekennzeichnet, dass** mittels der Steuereinheit (6)
- der automatische Eingriff als ein dem manuellen Lenkmanöver entgegengesetzter Eingriff vorgenommen wird, wenn die bestimmte Fahrerreaktionsklasse einer ersten Fahrerreaktionsklasse entspricht; und
- der automatische Eingriff als ein das manuelle Lenkmanöver unterstützender Eingriff vorgenommen wird, wenn die bestimmte Fahrerreaktionsklasse einer zweiten Fahrerreaktionsklasse entspricht.

9. System zum Beenden einer Bankettfahrt eines Kraftfahrzeugs (1), wobei das System (2)
- eine Detektionseinheit (3) beinhaltet, dazu eingerichtet, zu erkennen, dass sich das Kraftfahrzeug (1) wenigstens teilweise in einem Bankett befindet, wobei die Detektionseinheit (3) dazu eingerichtet ist, mittels eines ein Systems der Detektionseinheit (3) zur Detektion einer Fahrzeugzustandsgröße einen Kennwert für eine Wahrscheinlichkeit dafür zu errechnen, dass sich wenigstens ein Rad des Kraftfahrzeugs (1) in dem Bankett befindet, und dazu einen zeitlichen Verlauf einer Raddrehzahl, eines Radschlupfs, einer Querbeschleunigung, einer Längsbeschleunigung und/oder einer Vertikalbeschleunigung des Kraftfahrzeugs (1), einer Gierrate des Kraftfahrzeugs (1), eines Einfederwegs eines oder mehrerer Räder des Kraftfahrzeugs (1) oder einer Dämpferbeschleunigung eines oder mehrerer Dämpfer des Kraftfahrzeugs (1) zu bestimmen;
- eine Lenksensoreinheit (4) beinhaltet, dazu eingerichtet, eine Lenkintensität eines manuellen Lenkmanövers zu bestimmen;
- eine Recheneinheit (5) beinhaltet, dazu eingerichtet, dem Lenkmanöver abhängig von der Lenkintensität eine von wenigstens zwei vorgegebenen Lenkkennzahlen zuzuordnen; und
- eine Steuereinheit (6) beinhaltet, dazu eingerichtet, abhängig von der zugeordneten Lenkkennzahl einen automatischen Eingriff in eine Fahrzeugsteuerung vorzunehmen.

10. Computerprogramm mit Befehlen, welche, wenn das Computerprogramm von einem System (2) nach Anspruch 9 ausgeführt wird, das System (2) dazu veranlassen, ein Verfahren nach einem der Ansprüche 1 bis 8 durchzuführen.

## Claims

1. Method for stopping a motor vehicle (1) from driving on a verge, wherein
- a detection unit (3) of the motor vehicle (1) is used to detect that the motor vehicle (1) is at least partially located on a verge, and for this purpose a system of the detection unit (3) for detecting a vehicle state variable is used to calculate a characteristic parameter for a probability that at least one wheel of the motor vehicle (1) is located on the verge, wherein for this purpose a time curve of a wheel speed, of a wheel slip, of a lateral acceleration, of a longitudinal acceleration and/or of a vertical acceleration of the motor vehicle (1), of a yaw rate of the motor vehicle (1), of a spring deflection of one or more wheels of the motor vehicle (1) or of a shock absorber acceleration of one or more shock absorbers of the motor vehicle (1) is determined;
- a steering intensity of a manual steering maneuver is determined by means of a steering sensor unit (4) of the motor vehicle (1);
- one of at least two predefined steering characteristic values is assigned to the steering maneuver depending on the steering intensity by means of a computing unit (5) of the motor vehicle (1); and
- depending on the assigned steering characteristic value, an automatic intervention in the vehicle control is carried out by means of a control unit (6) of the motor vehicle (1).

2. Method according to claim 1,
**characterized in that**
- in order to determine the steering intensity, a steering angle of the steering maneuver is determined; and
- a first steering characteristic value of the steering characteristic values is assigned to the steering maneuver if a magnitude of the steering angle is less than or equal to a predefined first steering angle limit value.

3. Method according to claim 2,
**characterized in that**
- in order to determine the steering intensity, a steering angle speed of the steering maneuver is determined; and
- a second steering characteristic value of the steering characteristic values is assigned to the steering maneuver if
- the magnitude of the steering angle is greater than the first steering angle limit value; and
- a magnitude of the steering angle speed is less than or equal to a predefined steering speed limit value.

4. Method according to claim 3,
**characterized in that**
- the second steering characteristic value is assigned to the steering maneuver if
- the magnitude of the steering angle is greater than the first steering angle limit value and less than or equal to a predefined second steering angle limit value; and
- the magnitude of the steering angle speed is greater than the steering speed limit value; and
- a third steering characteristic value of the steering characteristic values is assigned to the steering action if
- the magnitude of the steering angle is greater than the first steering angle limit value and greater than the second steering angle limit value; and
- the magnitude of the steering angle speed is greater than the steering speed limit value.

5. Method according to any of claims 1 to 4,
**characterized in that**
- a braking intensity of a manual braking maneuver is determined by means of a braking sensor unit (4') of the motor vehicle;
- one of at least two predefined braking characteristic values is assigned to the braking maneuver depending on the braking intensity by means of the computing unit (5); and
- the automatic intervention in the vehicle control is carried out depending on the assigned braking characteristic value.

6. Method according to claim 5,
**characterized in that**
in order to determine the braking intensity, a brake pedal travel of the braking maneuver and/or a brake pedal speed of the braking maneuver and/or a brake pressure of the braking maneuver is/are determined.

7. Method according to either claim 5 or claim 6,
**characterized in that**
- the braking characteristic value and the steering characteristic value are weighted according to a predefined set of weighting factors by means of the computing unit (3);
- one driver reaction class of at least two predefined driver reaction classes is determined depending on the weighted braking characteristic value and the weighted steering characteristic value by means of the computing unit (3); and
- the intervention in the vehicle control is carried out depending on the determined driver reaction class.

8. Method according to claim 7,
**characterized in that** by means of the control unit (6)
- the automatic intervention is carried out as an intervention which opposes the manual steering maneuver if the determined driver reaction class corresponds to a first driver reaction class; and
- the automatic intervention is carried out as an intervention which supports the manual steering maneuver if the determined driver reaction class corresponds to a second driver reaction class.

9. System for stopping a motor vehicle (1) from driving on a verge, wherein the system (2)
- includes a detection unit (3) designed to detect that the motor vehicle (1) is at least partially located on a verge, wherein the detection unit (3) is designed to calculate, by means of a system of the detection unit (3) for detecting a vehicle state variable, a characteristic parameter for a probability that at least one wheel of the motor vehicle (1) is located on the verge, and for this purpose determine a time curve of a wheel speed, of a wheel slip, of a lateral acceleration, of a longitudinal acceleration and/or of a vertical acceleration of the motor vehicle (1), of a yaw rate of the motor vehicle (1), of a spring deflection of one or more wheels of the motor vehicle (1) or of a shock absorber acceleration of one or more shock absorbers of the motor vehicle (1);
- includes a steering sensor unit (4) designed to determine a steering intensity of a manual steering maneuver;
- includes a computing unit (5) designed to assign one of at least two predefined steering characteristic values to the steering maneuver depending on the steering intensity; and
- includes a control unit (6) designed to carry out an automatic intervention in the vehicle control depending on the assigned steering characteristic value.

10. Computer program comprising instructions which, when the computer program is executed by a system (2) according to claim 9, cause the system (2) to carry out a method according to any of claims 1 to 8.

## Revendications

1. Procédé permettant de mettre fin à une conduite sur accotement d'un véhicule automobile (1), dans lequel
- on détecte, au moyen d'une unité de détection (3) du véhicule automobile (1), que le véhicule automobile (1) se trouve au moins partiellement sur un accotement, et on calcule, au moyen d'un système de l'unité de détection (3) permettant de détecter une grandeur d'état de véhicule, une valeur caractéristique pour une probabilité qu'au moins une roue du véhicule automobile (1) se trouve sur l'accotement, dans lequel une évolution dans le temps d'une vitesse de rotation de roue, d'un patinage de roue, d'une accélération transversale, d'une accélération longitudinale et/ou d'une accélération verticale du véhicule automobile (1), d'un taux de lacet du véhicule automobile (1), d'un débattement d'une ou de plusieurs roues du véhicule automobile (1) ou d'une accélération d'amortisseur d'un ou de plusieurs amortisseurs du véhicule automobile (1) est déterminée ;
- une intensité de braquage d'une manœuvre de braquage manuelle est déterminée au moyen d'une unité formant capteur de braquage (4) du véhicule automobile (1) ;
- l'un parmi au moins deux indices de braquage prédéfinis est associé à la manœuvre de braquage en fonction de l'intensité de braquage au moyen d'une unité de calcul (5) du véhicule automobile (1) ; et
- en fonction de l'indice de braquage associé, une intervention automatique dans une commande de véhicule est effectuée au moyen d'une unité de commande (6) du véhicule automobile (1).

2. Procédé selon la revendication 1,
**caractérisé en ce que**
- un angle de braquage de la manœuvre de braquage est déterminé pour déterminer l'intensité de braquage ; et
- un premier indice de braquage parmi les indices de braquage est associé à la manœuvre de braquage lorsqu'une valeur de l'angle de braquage est inférieure ou égale à une première valeur limite d'angle de braquage prédéfinie.

3. Procédé selon la revendication 2,
**caractérisé en ce que**
- une vitesse angulaire de braquage de la manœuvre de braquage est déterminée pour déterminer l'intensité de braquage ; et
- un deuxième indice de braquage parmi les indices de braquage est associé à la manœuvre de braquage lorsque
- la valeur de l'angle de braquage est supérieure à la première valeur limite d'angle de braquage ; et
- une valeur de la vitesse angulaire de braquage est inférieure ou égale à une valeur limite de vitesse de braquage prédéfinie.

4. Procédé selon la revendication 3,
**caractérisé en ce que**
- le deuxième indice de braquage est associé à la manœuvre de braquage lorsque
- la valeur de l'angle de braquage est supérieure à la première valeur limite d'angle de braquage et inférieure ou égale à une seconde valeur limite d'angle de braquage prédéfinie ; et
- la valeur de la vitesse angulaire de braquage est supérieure à la valeur limite de vitesse de braquage ; et
- un troisième indice de braquage parmi les indices de braquage est associé à l'action de braquage si
- la valeur de l'angle de braquage est supérieure à la première valeur limite d'angle de braquage et supérieure à la seconde valeur limite d'angle de braquage ; et
- la valeur de la vitesse angulaire de braquage est supérieure à la valeur limite de vitesse de braquage.

5. Procédé selon l'une des revendications 1 à 4,
**caractérisé en ce que**
- une intensité de freinage d'une manœuvre de freinage manuelle est déterminée au moyen d'une unité formant capteur de freinage (4') du véhicule automobile ;
- l'un parmi au moins deux indices de freinage prédéfinis est associé à la manœuvre de freinage en fonction de l'intensité de freinage au moyen de l'unité de calcul (5) ; et
- l'intervention automatique dans la commande de véhicule est effectuée en fonction de l'indice de freinage associé.

6. Procédé selon la revendication 5,
**caractérisé en ce que**
pour déterminer l'intensité de freinage, une course de la pédale de frein de la manœuvre de freinage et/ou une vitesse de la pédale de frein de la manœuvre de freinage et/ou une pression de freinage de la manœuvre de freinage sont déterminées.

7. Procédé selon l'une des revendications 5 ou 6,
**caractérisé en ce que**
- l'indice de freinage et l'indice de braquage sont pondérés selon un ensemble prédéfini de facteurs de pondération au moyen de l'unité de calcul (3) ;
- une classe de réaction du conducteur parmi au moins deux classes de réaction du conducteur prédéfinies est déterminée en fonction de l'indice de freinage pondéré et de l'indice de braquage pondéré au moyen de l'unité de calcul (3) ; et
- l'intervention dans la commande de véhicule est effectuée en fonction de la classe de réaction du conducteur déterminée.

8. Procédé selon la revendication 7,
**caractérisé en ce que,** au moyen de l'unité de calcul (6),
- l'intervention automatique est effectuée comme une intervention opposée à la manœuvre de braquage manuelle lorsque la classe de réaction du conducteur déterminée correspond à une première classe de réaction du conducteur ; et
- l'intervention automatique est effectuée en tant qu'intervention d'assistance à la manœuvre de braquage manuelle lorsque la classe de réaction du conducteur déterminée correspond à une seconde classe de réaction du conducteur.

9. Système permettant de mettre fin à une conduite sur accotement d'un véhicule automobile (1), dans lequel le système (2)
- comprend une unité de détection (3), configurée pour reconnaître que le véhicule automobile (1) se trouve au moins partiellement sur un accotement, dans lequel l'unité de détection (3) est configurée pour calculer, au moyen d'un système de l'unité de détection (3) permettant de détecter une grandeur d'état de véhicule, une valeur caractéristique pour une probabilité qu'au moins une roue du véhicule automobile (1) se trouve sur l'accotement, et pour déterminer une évolution dans le temps d'une vitesse de rotation de roue, d'un patinage de roue, d'une accélération transversale, d'une accélération longitudinale et/ou d'une accélération verticale du véhicule automobile (1), d'un taux de lacet du véhicule automobile (1), d'un débattement d'une ou de plusieurs roues du véhicule automobile (1) ou d'une accélération d'amortisseur d'un ou de plusieurs amortisseurs du véhicule automobile (1) ;
- comprend une unité formant capteur de braquage (4), configurée pour déterminer une intensité de braquage d'une manœuvre de braquage manuelle ;
- comprend une unité de calcul (5), configurée pour associer à la manœuvre de braquage, en fonction de l'intensité de braquage, l'un parmi au moins deux indices de braquage prédéfinis ; et
- comprend une unité de commande (6), configurée pour effectuer, en fonction de l'indice de braquage associé, une intervention automatique dans une commande de véhicule.

10. Programme informatique comportant des instructions qui, lorsque le programme informatique est exécuté par un système (2) selon la revendication 9, amènent le système (2) à réaliser un procédé selon l'une des revendications 1 à 8.
